(19) **Europäisches Patentamt**
**European Patent Office**
**Office européen des brevets**

(11) **EP 3 663 693 B1**

(12) **EUROPEAN PATENT SPECIFICATION**

(45) Date of publication and mention
of the grant of the patent:
**30.08.2023  Bulletin 2023/35**

(51) International Patent Classification (IPC):
**F28F 1/42** (2006.01)     **A01J 11/00** (2006.01)
**A23C 1/00** (2006.01)     **A23C 1/01** (2006.01)
**B01B 1/00** (2006.01)     **F28D 7/16** (2006.01)
**F28F 1/06** (2006.01)     **F28F 1/08** (2006.01)
**F28D 21/00** (2006.01)

(21) Application number: **18211140.1**

(22) Date of filing: **07.12.2018**

(52) Cooperative Patent Classification (CPC):
**F28D 7/16; A01J 11/00; A23C 1/01; A23C 1/12;**
**B01B 1/005; B01D 1/065; B01D 19/0063;**
**F28F 1/06; F28F 1/08; F28F 1/42; F28F 1/424;**
**F28F 1/426;** F28D 2021/0042; F28D 2021/0064;
F28F 2210/06

(54) **FALLING FILM EVAPORATOR FOR DAIRY PRODUCTS**

FALLFILMVERDAMPFER FÜR MILCHPRODUKTE

ÉVAPORATEUR À COUCHES MINCES POUR PRODUITS LAITIERS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.06.2020  Bulletin 2020/24**

(73) Proprietor: **Tetra Laval Holdings & Finance S.A.
1009 Pully (CH)**

(72) Inventors:
• **INNINGS, Fredrik
  24745 TORNA HÄLLESTAD (SE)**

• **JONGSMA, Alfred
  9722BE Groningen (NL)**

(74) Representative: **Tetra Pak - Patent Attorneys SE
AB Tetra Pak
Patent Department
Ruben Rausings gata
221 86 Lund (SE)**

(56) References cited:
EP-A1- 1 815 745         WO-A1-2010/079148
WO-A1-2014/006151     US-A- 4 612 086

EP 3 663 693 B1

**Description**

Technical Field

The invention relates to a falling film evaporator for reducing a liquid content of a dairy product, where the evaporator has vertical heat transfer tubes with outer surfaces over which a heating media can flow, and with inner surfaces over which the dairy product can flow.

Background

Today falling film evaporators are used to concentrate dairy products, especially milk which is a heat sensitive product. The falling film evaporator is a special type of heat exchanger where evaporation takes place inside vertical tubes, but there are also applications where the process fluid evaporates on the outside of horizontal or vertical tubes. In all cases, the dairy product to be evaporated flows downwards over the surfaces of the vertical tubes by gravity as a continuous film. The dairy product will create a film along the tube walls, progressing downwards (falling). A fluid distributor is used to maintain an even liquid distribution for all tubes along which the dairy product falls.

When the dairy product flows over inner surfaces of the vertical tubes the heating media, typically steam, flows over outer surfaces of the vertical tubes. Heat from the steam is then transferred through the tubes and to the dairy product. This results in that water in dairy product enters the gaseous phase in form of vapor inside the vertical tubes. In order to maintain conservation of mass as this process proceeds, the downward vapor velocity increases, increasing the shear force acting on the liquid film and therefore also the velocity of the dairy product. After the vapor and the dairy product, which how has a lower content of water, has the left the vertical tubes at their bottoms, the vapor is often separated out from dairy product by a vapor-liquid separator. The concentrated dairy product is collected at the bottom of the falling film evaporator and some is collected at the bottom of the vapor-liquid separator. The vapor exits the vapor-liquid separator via a dedicated vapor outlet.

The document EP 1 815 745 A1 discloses a falling film evaporator according to the preamble of claim 1.

To generate the heating media, typically having the form of steam, a lot of energy is required. To make sure the energy is efficiently used it is important that the energy stored in the heating media is efficiently transferred to the dairy product.

Summary

It is an object of the invention to at improve current falling film evaporators used in dairy applications. In particular, it is an object to ensure that heat is efficiently transferred from the heating media to the dairy product.

According to one aspect a falling film evaporator for reducing a liquid content of a dairy product is provided. The evaporator comprises a housing having an inlet and an outlet for passing a heating media through the housing. A number of heat transfer tubes are vertically arranged inside the housing such that the heating media can flow over outer surfaces of the heat transfer tubes. Each heat transfer tube of the heat transfer tubes comprises an upper inlet and a lower outlet for passing the dairy product over an inner surface of the heat transfer tube. Each heat transfer tube comprises corrugations that extend along the length of the heat transfer tube.

The corrugations are advantageous, e.g. in that they provide efficient transfer of heat from the heating media to the dairy product.

The corrugations may form a helical-shaped pattern on the heat transfer tube.

The corrugations may have, as seen along a cross-sectional length of the heat transfer tube, a sinusoidal shape.

The corrugations may be pressed into the heat transfer tube, inwards in a direction towards a center line of the heat transfer tube.

A pitch of the corrugations may be within the range of 8 mm to 12 mm, or may be within the range of 9,5 mm to 10,5 mm.

A height of the corrugations may be within the range of 0,7 mm to 1,2 mm, or may be within the range of 0,9 mm to 1,0 mm.

A diameter of the heat transfer tube may be within the range of 52 mm to 58 mm, or may be within the range of 54 mm to 56 mm.

Each of the different features described above contribute to efficiently transferring heat from the heating media to the dairy product.

According to another aspect a method for reducing a liquid content of a dairy product in a falling film evaporator is provided. The method comprises passing a heating media through a housing of the falling film evaporator, over outer surfaces of heat transfer tubes that are vertically arranged inside the housing, and passing the dairy product over inner surfaces of the heat transfer tubes. The passing of the dairy product over the inner surfaces of the heat transfer tubes comprises passing the dairy product over corrugations that extend along the length of each heat transfer tube of the heat transfer tubes.

The method may comprise passing the dairy product over the inner surfaces of the heat transfer tubes at a wetting rate of 2450 kg/mh to 2850 kg/mh.

The method has the same advantages as the falling film evaporator above, and may incorporate any of the features described in connection with the falling film evaporator.

Still other objectives, features, aspects and advantages of the invention will appear from the following detailed description as well as from the drawings.

Drawings

Embodiments of the invention will now be described, by way of example, with reference to the accompanying schematic drawings, in which

Fig. 1 is a schematic view of falling film evaporator and a vapor-liquid separator,
Fig. 2 is a cross-sectional view of a heat transfer tube arranged in the falling film evaporator of Fig. 1,
Fig. 3 is a view showing a cross-sectional profile of the heat transfer tube of Fig. 2, and
Fig. 4 is a flow chart of a method for reducing a liquid content of a dairy product with the falling film evaporator of Fig. 1.

Detailed Description

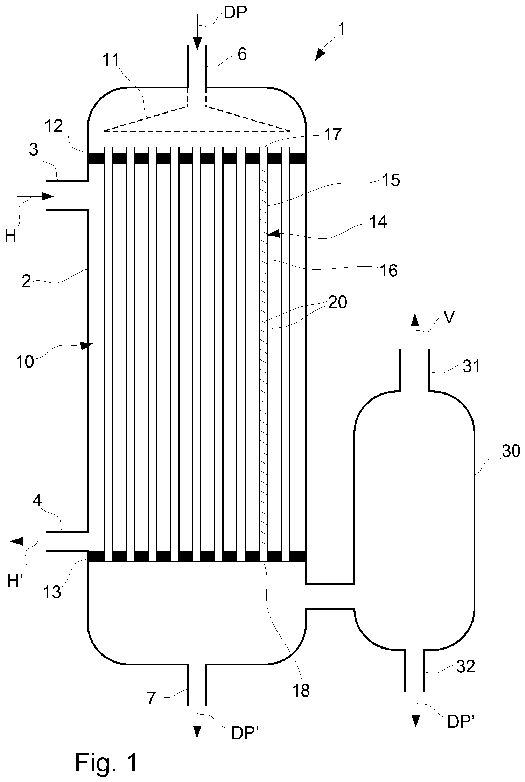

With reference to Fig. 1 a falling film evaporator 1 is illustrated. The falling film evaporator 1 has a housing 2 which has an inlet 3 and an outlet 4 for passing a heating media H through the housing 2. The heating media H is typically steam which enters the inlet 3 and which exits housing 2 via the outlet 4 in form of condensed steam H'. The steam may be generated in any suitable manner.

A number of heat transfer tubes 10 are vertically arranged inside the housing 2. The heat transfer tubes 10 are located at a distance from each other such that the heating media H may flow around them, over the outer surfaces 15 of the heat transfer tubes 10. The heat transfer tubes 10 are kept in place and at a distance from each other by an upper support plate 12 and a lower support plate 13. The support plates 12, 13 also enclose the space in which the heating media flows, such that it is separated from product that flows inside the heat transfer tubes 10.

The falling film evaporator 1 has an inlet 6 for a dairy product DP. A conventional distributor 11 is arranged to receive the dairy product DP from the inlet 6 and distribute it over the upper support plate 12.

Each heat transfer tube 14 of the heat transfer tubes 10 has an upper inlet 17 for the dairy product DP, and a lower outlet 18 through which the dairy product DP may leave the heat transfer tube 14. From the upper support plate 12 the dairy product DP may flow into the upper inlets 17 of the heat transfer tubes 10. When the dairy product DP enters an inlet 17, it flows over an inner surface 16 of the heat transfer tube 14, in a downward (falling) direction towards the outlet 18.

In operation, heat from the heating media H is transferred to the dairy product DP. When this happens water in the dairy product DP evaporates and form vapor. The vapor and dairy product DP, which now is more concentrated since it has less water, exits the heat transfer tubes 10 and enters a lower part of the housing 2, at a location beneath the lower support plate 13. The concentrated dairy product DP' flows out from the falling film evaporator 1 via outlet 7. The vapor which typically also contains a small amount of dairy product, is transferred to a conventional vapor-liquid separator 30 that is suitable for dairy applications. The vapor-liquid separator 30 has an outlet 31 for vapor V and an outlet 32 for dairy product DP', which also is concentrated as compare to the dairy product DP that entered the falling film evaporator 1.

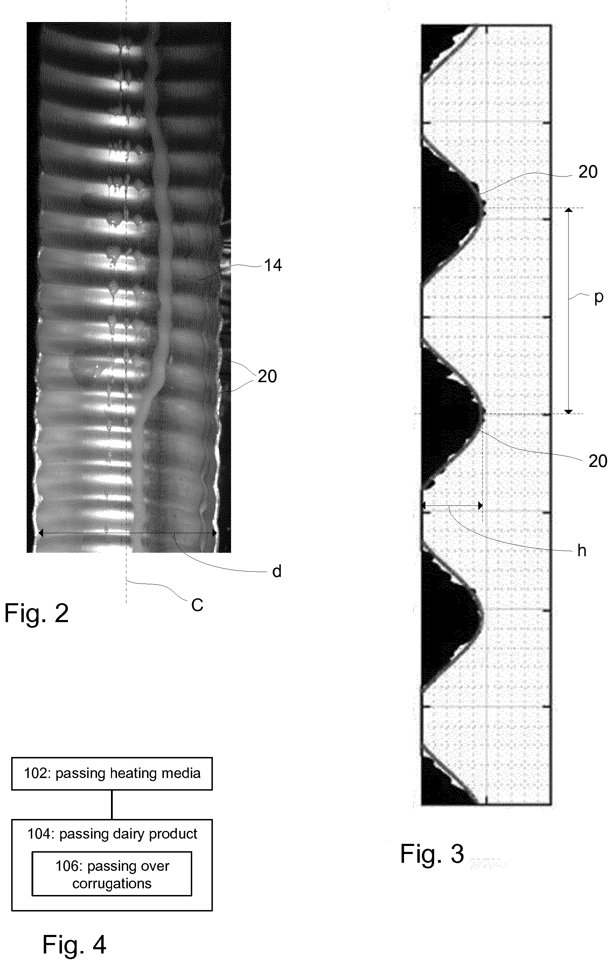

With further reference to Fig. 2, each heat transfer tube 14 of the heat transfer tubes 10 comprises corrugations 20 that extend along the length of the heat transfer tube 14. The corrugations 20 may form a helical-shaped pattern on the heat transfer tube 14. The corrugations 20 may have, as seen along a cross-sectional length of the heat transfer tube 14, a sinusoidal shape. The corrugations 20 may be pressed into the heat transfer tube 14, inwards in a direction towards a center line C of the heat transfer tube 14. Each heat transfer tube 14 may be made of stainless steel, and the corrugations 20 may be formed in the tubes 14 by cold rolling.

With further reference to Fig. 3, a pitch p of the corrugations may be within the range of 8 mm to 12 mm, or may be within the range of 9,5 mm to 10,5 mm. A height h of the corrugations may be within the range of 0,7 mm to 1,2 mm, or may be within the range of 0,9 mm to 1,0 mm. A diameter d of the heat transfer tube heat transfer tube 14, see Fig. 2, may be within the range of 52 mm to 58 mm, or may be within the range of 54 mm to 56 mm.

With reference to Fig. 3, a method for reducing a liquid content of a dairy product DP in a falling film evaporator 1 as described above is illustrated. The dairy product DP is milk or is a product that contains milk. The method comprises passing 102 the heating media H through the housing 2 of the falling film evaporator 1, over the outer surfaces 15 of the heat transfer tubes 10 that are vertically arranged inside the housing 2. Simultaneously, the dairy product DP is passed 104 over inner surfaces 16 of the heat transfer tubes 14. The passing 104 over the inner surfaces 16 of the heat transfer tubes 14 comprises passing 106 the dairy product over corrugations 20 that extend along the length of each heat transfer tube 14 of the heat transfer tubes 10. To accomplish the flows of the heating media H, the dairy product and the concentrated dairy product DP' conventional piping systems with pumps and valves are used.

The passing 104 of the dairy product over the inner surfaces 16 of the heat transfer tube 14 may be performed with a wetting rate of 2450 kg/mh to 2850 kg/mh. The wetting rate $\dot{W}$ is defined as

$$W = \frac{\dot{m}}{\pi \cdot d}$$

Where $\dot{m}$ is the mass flow rate (kg per hour) through the tube, $\pi$ is the ratio of the distance around a circle to the circle's diameter, and $d$ is the diameter (m) of the tube.

From the description above follows that, although various embodiments of the invention have been described and shown, the invention is not restricted thereto, but may also be embodied in other ways within the scope of the subject-matter defined in the following claims.

## Claims

1. A falling film evaporator (1) for reducing a liquid content of a dairy product (DP), the evaporator (1) comprising

   a housing (2) having an inlet (3) and an outlet (4) for passing a heating media (H) through the housing (2),
   a number of heat transfer tubes (10) that are vertically arranged inside the housing (1) such that the heating media (H) can flow over outer surfaces (15) of the heat transfer tubes (10), each heat transfer tube (14) of the heat transfer tubes (10) comprising an upper inlet (17) and a lower outlet (18) for passing the dairy product over an inner surface (16) of the heat transfer tube (14), **characterised in that** each heat transfer tube (14) comprises corrugations (20) that extend along the length of the heat transfer tube (14).

2. A falling film evaporator according to claim 1, wherein the corrugations (20) form a helical-shaped pattern on the heat transfer tube (14).

3. A falling film evaporator according to claim 1 or 2, wherein the corrugations (20) have, as seen along a cross-sectional length of the heat transfer tube (14), a sinusoidal shape.

4. A falling film evaporator according to any preceding claim, wherein the corrugations are pressed into the heat transfer tube (14), inwards in a direction towards a center line (C) of the heat transfer tube (14).

5. A falling film evaporator according to any preceding claim, wherein a pitch (p) of the corrugations is within the range of 8 mm to 12 mm, or is within the range of 9,5 mm to 10,5 mm.

6. A falling film evaporator according to any preceding claim, wherein a height (h) of the corrugations is within the range of 0,7 mm to 1,2 mm, or is within the range of 0,9 mm to 1,0 mm.

7. A falling film evaporator according to any preceding claim, wherein a diameter (d) of the heat transfer tube (14) is within the range of 52 mm to 58 mm, or is within the range of 54 mm to 56 mm.

8. A method for reducing a liquid content of a dairy product (DP) in a falling film evaporator (1), according to claim 1 the method comprising

   passing (102) a heating media (H) through a housing (2) of the falling film evaporator (1), over outer surfaces (15) of heat transfer tubes (10) that are vertically arranged inside the housing (2),
   passing (104) the dairy product (DP) over inner surfaces (16) of the heat transfer tubes (14), **wherein**
   the passing (104) of the dairy product (DP) over the inner surfaces (16) of the heat transfer tubes (14) comprises passing (106) the dairy product over corrugations (20) that extend along the length of each heat transfer tube (14) of the heat transfer tubes (14).

9. A method according to claim 8, comprising passing (104) the dairy product over the inner surfaces (16) of the heat transfer tubes (14) at a wetting rate of 2450 kg/mh to 2850 kg/mh.

## Patentansprüche

1. Fallfilmverdampfer (1) zum Reduzieren eines Flüssigkeitsgehalts eines Molkereiprodukts (DP), wobei der Verdampfer (1) folgende Elemente umfasst:

   ein Gehäuse (2) mit einem Einlass (3) und einem Auslass (4) zum Durchleiten eines Heizmediums (H) durch das Gehäuse (2),
   eine Anzahl von Wärmeübertragungsrohren (10), die innerhalb des Gehäuses (1) vertikal angeordnet sind, derart, dass das Heizmedium (H) über Außenflächen (15) der Wärmeübertragungsrohre (10) strömen kann, wobei jedes Wärmeübertragungsrohr (14) der Wärmeübertragungsrohre (10) einen oberen Einlass (17) und einen unteren Auslass (18) zum Durchleiten des Molkereiprodukts über eine Innenfläche (16) des Wärmeübertragungsrohrs (14) umfasst,
   **dadurch gekennzeichnet, dass**
   jedes Wärmeübertragungsrohr (14) Riffeln (20) umfasst, die sich über die Länge des Wärmeübertragungsrohrs (14) erstrecken.

2. Fallfilmverdampfer nach Anspruch 1, wobei die Riffeln (20) ein schraubenförmiges Muster auf dem Wärmeübertragungsrohr (14) bilden.

3. Fallfilmverdampfer nach Anspruch 1 oder 2, wobei die Riffeln (20) entlang einer Querschnittslänge des Wärmeübertragungsrohrs (14) gesehen eine sinusförmige Form aufweisen.

4.  Fallfilmverdampfer nach einem der vorhergehenden Ansprüche, wobei die Riffeln in das Wärmeübertragungsrohr (14) nach innen in Richtung einer Mittellinie (C) des Wärmeübertragungsrohrs (14) gepresst sind.

5.  Fallfilmverdampfer nach einem der vorhergehenden Ansprüche, wobei ein Abstand (p) der Riffeln untereinander im Bereich von 8 mm bis 12 mm oder im Bereich von 9,5 mm bis 10,5 mm liegt.

6.  Fallfilmverdampfer nach einem der vorhergehenden Ansprüche, wobei die Höhe (h) der Riffeln im Bereich von 0,7 mm bis 1,2 mm oder im Bereich von 0,9 mm bis 1,0 mm liegt.

7.  Fallfilmverdampfer nach einem der vorhergehenden Ansprüche, wobei ein Durchmesser (d) des Wärmeübertragungsrohrs (14) im Bereich von 52 mm bis 58 mm oder im Bereich von 54 mm bis 56 mm liegt.

8.  Verfahren zum Reduzieren eines Flüssigkeitsgehalts eines Molkereiprodukts (DP) in einem Fallfilmverdampfer (1) nach Anspruch 1, wobei das Verfahren folgende Vorgänge umfasst:

    Durchleiten (102) eines Heizmediums (H) durch ein Gehäuse (2) des Fallfilmverdampfers (1) über Außenflächen (15) von Wärmeübertragungsrohren (10), die innerhalb des Gehäuses (2) vertikal angeordnet sind,
    Durchleiten (104) des Molkereiprodukts (DP) über Innenflächen (16) der Wärmeübertragungsrohre (14), wobei das Durchleiten (104) des Molkereiprodukts (DP) über die Innenflächen (16) der Wärmeübertragungsrohre (14) das Durchleiten (106) des Molkereiprodukts über Riffeln (20) umfasst, die sich entlang der Länge jedes Wärmeübertragungsrohrs (14) der Wärmeübertragungsrohre (14) erstrecken.

9.  Verfahren nach Anspruch 8, umfassend das Durchleiten (104) des Molkereiprodukts mit einer Benetzungsrate von 2450 kg/mh bis 2850 kg/mh über die Innenflächen (16) der Wärmeübertragungsrohre (14).

**Revendications**

1.  Évaporateur à flot tombant (1) pour réduire un teneur en liquide d'un produit laitier (DP), l'évaporateur (1) comprenant

    un boîtier (2) ayant une entrée (3) et une sortie (4) pour faire passer un agent chauffant (H) à travers le boîtier (2),
    un nombre de tubes de transfert de chaleur (10) qui sont verticalement agencés à l'intérieur du boîtier (1) de telle sorte que l'agent chauffant (H) puisse s'écouler par-dessus des surfaces extérieures (15) des tubes de transfert de chaleur (10), chaque tube de transfert de chaleur (14) des tubes de transfert de chaleur (10) comprenant une entrée supérieure (17) et une sortie inférieure (18) pour faire passer le produit laitier par-dessus une surface intérieure (16) du tube de transfert de chaleur (14), **caractérisé en ce que**

chaque tube de transfert de chaleur (14) comprend des ondulations (20) qui s'étendent sur la longueur du tube de transfert de chaleur (14).

2.  Évaporateur à flot tombant selon la revendication 1, dans lequel les ondulations (20) forment un motif de forme hélicoïdale sur le tube de transfert de chaleur (14).

3.  Évaporateur à flot tombant selon la revendication 1 ou 2, dans lequel les ondulations (20) ont, en vue le long d'une longueur de section transversale du tube de transfert de chaleur (14), une forme sinusoïdale.

4.  Évaporateur à flot tombant selon une quelconque revendication précédente, dans lequel les ondulations sont pressées dans le tube de transfert de chaleur (14), vers l'intérieur dans une direction vers une ligne centrale (C) du tube de transfert de chaleur (14).

5.  Évaporateur à flot tombant selon une quelconque revendication précédente, dans lequel un pas (p) des ondulations est au sein de la plage de 8 mm à 12 mm, ou est au sein de la plage de 9,5 mm à 10,5 mm.

6.  Évaporateur à flot tombant selon une quelconque revendication précédente, dans lequel une hauteur (h) des ondulations est au sein de la plage de 0,7 mm à 1,2 mm, ou est au sein de la plage de 0,9 mm à 1,0 mm.

7.  Évaporateur à flot tombant selon une quelconque revendication précédente, dans lequel un diamètre (d) du tube de transfert de chaleur (14) est au sein de la plage de 52 mm à 58 mm, ou est au sein de la plage de 54 mm à 56 mm.

8.  Procédé pour réduire une teneur en liquide d'un produit laitier (DP) dans un évaporateur à flot tombant (1), selon la revendication 1, le procédé comprenant

    le passage (102) d'un agent chauffant (H) à travers un boîtier (2) de l'évaporateur à flot tombant (1), par-dessus des surfaces extérieures (15) de tubes de transfert de chaleur (10) qui sont verticalement agencés à l'intérieur du boîtier (2),
le passage (104) du produit laitier (DP) par-dessus des surfaces intérieures (16) des tubes de transfert de chaleur (14), dans lequel
le passage (104) du produit laitier (DP) par-dessus les surfaces intérieures (16) des tubes de transfert de chaleur (14) comprend le passage (106) du produit laitier par-dessus des ondulations (20) qui s'étendent sur la longueur de chaque tube de transfert de chaleur (14) des tubes de transfert de chaleur (14).

9.  Procédé selon la revendication 8, comprenant le passage (104) du produit laitier par-dessus les surfaces intérieures (16) des tubes de transfert de chaleur (14) à un taux de mouillage de 2450 kg/mh à 2850 kg/mh.

Fig. 1

14

20

d

C

Fig. 2

20

p

20

h

Fig. 3

102: passing heating media

104: passing dairy product

106: passing over corrugations

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1815745 A1